# EUROPEAN PATENT SPECIFICATION

(11) **EP 2 135 852 B1**
(45) Date of publication and mention of the grant of the patent: **18.06.2014**
(21) Application number: 09007575.5
(22) Date of filing: 09.06.2009
(51) Int. Cl.: C04B 41/49, C08G 18/10, C09J 175/00

(54) **A sealing composition, a method for preparing a sealing composition and the use of such a sealing composition**
Versieglungszusammensetzung, Verfahren zur Herstellung einer Versieglungszusammensetzung und Verwendung dafür
Composition d'étanchéité, procédé de préparation d'une composition d'étanchéité et utilisation d'une telle composition d'étanchéité

(30) Priority: 19.06.2008 EP 08011137
(43) Date of publication of application: 23.12.2009
(73) Proprietor: Bona GmbH Deutschland, 65549 Limburg an der Lahn (DE)
(72) Inventor: Brokamp, Thomas, Dr., 65549 Limburg an der Lahn (DE)
(74) Representative: Müller, Eckhard

(56) References cited:
- US-A1- 2007 066 768
- US-B1- 6 310 170

## Description

### Technical Field

The present invention relates to a sealing composition, a method for preparing a sealing composition and the use of such a sealing composition.

### Background Art

Sealing materials for porous building materials on the basis of low viscous polyurethane (typically based on (p)MDI (-prepolymers)) or epoxy resins are well known; an overview can be found in the international patent application WO 2000/00451 related to a method for sealing porous building materials and building components. Similar materials with higher viscosity, in particular on an epoxy base, are also known to work well and are widely available.

Sealing materials based on dispersion are also in use (e.g. Diofan from SolVin France S.A.), but they are only of limited use in the above specified technical field.

Silane functional polymers and their use in compositions for sealants, adhesives and coatings are also well known and understood. The patent application US 2003/0229192 A1 relates to moisture-curable polyether urethanes with reactive silane groups and their use as sealants, adhesives and coatings.

Some adhesives, which are based on silane functional polymers, are also used as a sealant agent against water vapour.

The use of monomeric silanes as masonry water repellents is well known; e.g. Wacker Silicones, Germany, offers several products under the Silres® trade name.

### Disclosure of Invention

### Technical Problem

Porous building materials contain often high amounts of water, especially if they are created on site (e.g. concrete). This water can harm other building materials (second materials) attached to them. A sealant can protect this second material from the water coming out of the first material.

After installation cement based sub floors are wet for periods of several weeks to several years, in particular in wet environment. Most sub floors are covered with a flooring material, e.g. a hardwood floor. Many of these floors are moisture sensitive, they might strongly expand and later shrink due to the exposure to a wet sub floor, leading to a damaged floor.

Further damage might arise because of the formation of mould or a hydrolysis reaction of an intermediate adhesive, used for gluing the floor to the sub floor.

To avoid such problems either the sub floor has to be dry or should be dried - which can require a long drying time - or the sub floor has to be sealed.

All the solutions currently known in order to seal porous building materials against uprising water vapour have disadvantages.

Epoxy based material are two component systems and therefore the two components have to be mixed prior to application. Both components are hazardous and the users have a high risk getting health problems.

Polyurethanes based on MDI prepolymers are normally used as a 1-component material. Due to the water - isocyanate reaction and the following formation of carbondioxide - these materials have a tendency to "foam up" leading to weak coatings. Also these products are hazardous. Further the isocyanates out of not completely hardened Polyurethane layers can react with aminosilanes in silane based adhesives, leading to a weak, not hardened intermediate layer between the polyurethane sealer and the adhesive.

Water repellent silanes act as a repellent for liquid water, as they do not form a "coating", and therefore water vapour can easily pass through.

Dispersion based products are also in use as water vapour barriers. Their applicability is limited, because only very thin layers can be applied; thicker, more concentrated layers harden very slowly, as the water has difficulties to evaporate.

The use of a silane based adhesive as a moisture barrier is also not satisfying, as very high amounts of adhesive > 2 kg/m² have to be applied, leading to a long curing time and difficulties during laying.

### Object of the invention

Therefore it is an object of the invention to provide a mixture for sealing building materials avoiding at least partly the disadvantageous described above.

### Summary of the invention

The present invention relates to a method to seal building materials, especially cement based floors, e.g. concrete. Furthermore the invention relates to a sealing composition, a mixture based on moisture curing silane functional polymers and monomers, hydrocarbon resins and other ingredients. This mixture can be used to seal fresh or wet building materials as mentioned above. The term "seal" in this context is especially related to a strongly reduced diffusion of water vapour through the set ("hardened") sealing material.

The object of the invention is solved by a sealing composition, which is a mixture based on moisture curing silane functional polymers and monomers, hydrocarbon resins and other ingredients the sealing composition comprising:
a) optional a hydro carbon resin preferably in an amount up to 50 (percent by weight (wt-%))
   wherein this resin having a liquid state at a temperature of 23 °C, having a viscosity of 0.1 to 20 Pa•s at a temperature of 23 °C and having an OH-content between 0 to 8 OH-%;
b) an alkyltrimethoxysilane and/or an alkyltriethoxysilane and/or an alkyldimethoxymethylsilane or and/or an alkyldiethoxyethylsilane; (these expressions are including the oligomers thereof).
c) an aminosilane preferably in an amount of 0.1 to 5 (percent by weight (wt-%)) (this expression including the respective oligomers)
d) optional silica preferably in an amount of up to 50 (percent by weight (wt-%)) and/or pyrogenic silica preferably in an amount of 0.1 to 30 (percent by weight (wt-%));
e) a silane functional polymer with a molecular weight in the range of 500 to 20000 g/mol;
f) optional a catalyst in an amount of 0 to 2 (percent by weight (wt-%));
g) calcium and/or magnesium carbonate preferably in an amount up to 0 to 50 (percent by weight (wt-%));(the materials can be grinded or precipitated)

The mixture can be applied in an easy way in different defined thicknesses with the different tools available in this technical field.

Furthermore the object is solved by a method for preparing a sealing composition for the sealing building materials with the following steps:
a) providing a hydro carbon resin;
b) adding the components
   i) an alkyltrimethoxysilane and/or an alkyltriethoxysilane and/or an alkyldimethoxymethylsilane and/or an alkyldiethoxyethylsilane,
   ii) an aminosilane,
      and mixing them under protective gas (argon, nitrogen) together with the hydro carbon resin for 10 min;
c) then adding
   iii) a precipitated calcium carbonate,
   iv) silica,and/or pyrogenic silica;
d) mixing under static vacuum to a temperature up to 50 to 80 °C preferably by heating or agitation;
e) then adding the silane functional polymer preferably without fillers, and continuing the mixing procedure under vacuum;
f) then adding the catalyst;
g) continuing mixing under vacuum for another 1 to 5 minutes;
h) filling the ready mixed material in buckets, bags or other containers.

Increasing the temperature of the mixture to 50 to 80 °C can be done by heating or agitation.

Furthermore parts of the hydrocarbon resin might be added before step e). In that way the mixture up to step c) has a higher viscosity and therefore heating by agitation is then more efficient. The present invention is not limited to the use of specific hydrocarbon resin. In principle, hydrocarbon resins known in the art and used in sealing compositions and the like can be employed for the purpose of this invention.

After a waiting time of 1 day the resulting mixture has a nearly Newton-type viscosity in the range of 1 to 100 Pa s (23 °C) and self levelling properties. (In contact with normal air the material takes up water and sets (harden) in 1 to 24 h.)

It has been measured that the hardened films made from the material as mentioned above have a tensile strength > 0.5 MPa and an elongation at break > 50 %. Test samples have dimensions of 20 mm x 110 mm cut from film, initial grip distance of Zwick tensile tester is 60 mm and test speed is 60 mm/min.

Furthermore diffusion measurements of water vapour at a temperature of 23 °C from 98 % relative air humidity to 50 % relative air humidity lead to results in the range 2 to 15 g/(m²•d). Diffusion measurement is conducted according to standard DIN EN ISO 7783-2 with an amount of 400 - 1000 g/m² sealing composition on top of a screed sample (thickness 10 mm) placed on top of a sealed cup filled with water in an environment with 50 % relative air humidity. Screed sample is prepared according to K. Glas "Zementgebundene Estriche und Industrieböden", R. Müller Verlag, Köln 1996, ZE30 Rezeptur mit 0,3-0,8 mm Sand.

The mixture is under current European (EU) law not hazardous.

It is preferred to use the sealing composition as disclosed above for sealing building materials, in particular for sealing of cement based floors, such as floors constructed of concrete.

Preferably the functional polymer should have a molecular weight in the range of 500 to 20000 g/mol. For such a material e.g. SPUR+ 1010 LM, SPUR+ 1050 by Momentive Performance Materials, USA, or Desmoseal S XP 2458 by Bayer Material Science, Germany, or Geniosil STP-E10, Wacker Silicones, Germany, can be used. In general functional polymers derived from polyurethanes and/or polyethers are preferably used in the inventive sealing composition.

As the catalyst different catalysts can be used; in any case the catalyst should have the properties, that it catalyse the hydrolysis and condensation reaction of the given prepolymers. Catalysts which can be used are specified in the document US 2003/0229192 A1. If the prepolymer is based on an alpha-silane (e.g. Geniosil STP-E 10), an aminosilane is sufficient.

Adding an antioxidant, e.g. Octadecyl-3-(3,5-di-tert-butyl-4-hydroxyphenyl)proprionate), is useful if the cured materials shall be exposed to high temperatures (> 40 °C) or light.

If the cured materials shall be exposed to high temperatures (> 40 °C) or light also a light/UV stabilizers (e.g. bis(1,2,2,6,6-pentamethyl-4-piperidinyl)sebacate) should be added.

It is further possible to add a calcium carbonate (e.g. Omyacarb 10 BG by Omya AG, Switzerland) or a precipitated calcium carbonate; e.g. Schaefer Precarb 100 by Schaefer Kalk Germany, or Socal 312 or Socal U1S1 by Solvay, Belgium; or other fillers to the formulation as an extenter up to 50 (percent by weight (wt-%)).

A sealing composition can have the alkyltrimethoxysilane and/or the alkyltriethoxysilane and/or the alkyldimethoxymethylsilane and/or the alkyldiethoxyethylsilane in an amount of 0.1 to 10 and preferably 1 to 5 (percent by weight (wt-%)).

In the above alkyltriethoxysilanes and/or alkyltrimethoxysilanes and/or alkyldimethoxysilanes and/or alkyldiethoxysilanes the alkyl-moiety can be straight chain or branched alkyl having preferably 1 to 20 carbon atoms from which straight chain alkyl is preferred. Such compounds are available e.g. under the Silquest^{®} trade name (Momentive Performance Materials, Albany, New York, USA). Especially preferred are Octyltriethoxysilane, Propyltrimethoxysilane, Methyltriethoxysilane, Octyltrimethoxysilane and Propyltriethoxysilane.

Aminosilanes which can be employed in the present invention are commercially available, e.g. under the Silquest^{®} trade name. Preferred aminosilanes from the Silquest^{®} product line include Gamma-Aminopropyltriethoxysilane, Gamma-Aminopropyltrimethoxysilane, Gamma-Aminopropyldiethoxy-methyl-silane, Gamma-Aminopropyl-dimethoxy-methyl-silane, and N-(beta-Aminoethyl)-gamma-aminopropyltrimethoxysilane.

If required the aminosilane should be added in an amount of 1 to 5 (percent by weight (wt-%))

With regard to the silica and/or pyrogenic silica component of the sealing composition according to the invention pyrogenic silica is especially preferred. Respective types pyrogenic are commercially available for example under the HDK^{®} trade name of Wacker Chemie AG, Burghausen, Germany. In principle, the hydrophilic typs of silica and/or pyrogenic silica are preferred for the purpose fo this invention, however, the hydrophobic types may be used as well.

The content of the silica and/or pyrogenic silica should be in the range of 1 to 20 (percent by weight (wt-%)).

Preferably the silane functional polymer is included in an amount of 10 to 60 (percent by weight (wt-%)).

Depending on the chosen catalyst, it has to be added in an amount of 0.1 to 2 (percent by weight (wt-%)).

The sealing composition is preferably applied on porous sand/cement based plates, specially also for flooring purposes, in an amount of 200 to 1500 g/m². This amount per square meter is sufficient in order to give the necessary low water vapour permeability.

On site, the user can adjust the properties of the mixture further:
a) Decreasing setting time and allow quick bonding in thick layers. For this purpose water is added as a 2^{nd} component directly to the mixture. In this way hardening times can - if necessary - be reduced up to 95 %. This allows also application with a high thickness, where otherwise set times would be long, due to a very slow absorption of water, which is necessary for the setting reaction.
b) Lowering viscosity and better wetability of dusty surfaces. For this purpose it is preferred to add approximately 10 % of weight of a solvent so that the viscosity of the mixture can be on site reduced by adding such a solvent. A suitable solvent is e.g. Ethanol or White Spirit, at the same time these solvents can also be used for cleaning, e.g. tools.

By adding an epoxy resin the set mixture will get an increased strength and toughness and additionally a further reduction of water vapour permeability is achieved. The epoxy does react with the aminosilane, and is therefore chemically bonded to the polymer network.

If the cured materials shall be exposed to high temperatures (> 40 °C) or light an antioxidant (e.g. octadecyl-3-(3,5-di-tert-butyl-4-hydroxyphenyl)proprionate) and/or light/UV stabilizers) is/are added (e.g. Bis(1,2,2,6,6-pentamethyl-4-piperidinyl)sebacate).

The original mixture is considered to be not hazardous.

The set film is a water vapour barrier, sufficient to lay on new and wet floors without damage other flooring material on top; this does include the use of levelling compounds, primers, adhesives and other materials, which might be used to lay the flooring material.

## Claims

1. Sealing composition comprising
a) an alkyltrimethoxysilane and/or an alkyltriethoxysilane and/or an alkyldimethoxymethylsilane or and/or an alkyldiethoxyethylsilane in an amount of 1 to 10 percent by weight (wt-%),
b) an aminosilane preferably in an amount of 1 to 5 percent by weight (wt-%);
c) optional silica preferably in an amount of up to 50 percent by weight (wt-%) and/or pyrogenic silica preferably in an amount of 0.1 to 30 percent by weight (wt-%);
d) a silane functional polymer with a molecular weight in the range of 500 to 20000 g/mol;
e) optional a catalyst in an amount of 0 to 2 percent by weight (wt-%) and
f) calcium and/or magnesium carbonate preferably in an amount up to 50 percent by weight (wt-%).

2. Sealing composition according to claim 1, wherein an alkylsilane is used and the alkyl is a linear or branched alkyl.

3. Sealing composition according to any of the aforementioned claims, wherein the functional polymers are methoxy functionalized polymers and/or ethoxy functionalized polymers.

4. Sealing composition according to any of the aforementioned claims comprising an antioxidant, preferably an octadecyl-3-(3,5-di-tert-butyl-4-hydroxyphenyl)proprionate), and/or a light/UV stabilizer, preferably a bis(1,2,2,6,6-pentamethyl-4-piperidinyl)sebacate.

5. Sealing composition according to any of the aforementioned claims comprising the silane functional polymer in an amount of 5 to 50 percent by weight (wt-%).

6. Method for preparing a sealing composition according to claim 1 comprising the following steps:
a) mixing the components
i) an alkyltrimethoxysilane and/or an alkyltriethoxysilane and/or an alkyldimethoxymethylsilane and/or an alkyldiethoxyethylsilane,
ii) an aminosilane,
under protective gas (argon, nitrogen) for 10 min;
b) then adding
iii) a precipitated calcium carbonate,
iv) silica, and/or pyrogenic silica;
c) mixing under static vacuum to a temperature up to 50 to 80 °C preferably by heating or agitation;
d) then adding the silane functional polymer preferably without fillers, and continuing the mixing procedure under vacuum;
e) then adding the catalyst;
f) continuing mixing under vacuum for another 1 to 5 minutes;
g) filling the ready mixed material in buckets, bags or other containers.

7. Method according to claim 6, wherein the sealing composition is applied on porous sand/cement based plates in an amount of 200 to 1500 g/m².

8. Method according to claim 6, wherein approximately 10 % of weight of a solvent is added.

9. Method according to claim 6, wherein an epoxy resin and/or a light/UV stabilizers and/or an antioxidant is/are added.

10. Method according to claim 9, wherein the antioxidant is octadecyl-3-(3,5-di-tert-butyl-4-hydroxyphenyl)proprionate).

11. Method according to claim 9, wherein the light/UV stabilizer is bis(1,2,2,6,6-pentamethyl-4-piperidinyl)sebacate.

12. Use of the sealing composition according to any one of claims 1 to 5 for sealing building materials, in particular for sealing of cement based floors, such as floors constructed of concrete.

## Patentansprüche

1. Abdichtungszusammensetzung, umfassend
a) ein Alkyltrimethoxysilan und/oder ein Alkyltriethoxysilan und/oder ein Alkyldimethoxymethylsilan und/oder ein Alkyldiethoxymethylsilan in einer Menge von 1 bis 10 Gewichtsprozent (Gew.-%);
b) ein Aminosilan, vorzugsweise in einer Menge von 1 bis 5 Gewichtsprozent (Gew.-%);
c) gegebenenfalls Siliciumdioxid, vorzugsweise in einer Menge von bis zu 50 Gewichtsprozent (Gew.-%), und/oder pyrogenes Siliciumdioxid, vorzugsweise in einer Menge von 0,1 bis 30 Gewichtsprozent (Gew.-%);
d) ein silanfunktionelles Polymer mit einem Molekulargewicht im Bereich von 500 bis 20.000 g/mol;
e) gegebenenfalls einen Katalysator in einer Menge von 0 bis 2 Gewichtsprozent (Gew.-%) und
f) Calcium- und/oder Magnesiumcarbonat, vorzugsweise in einer Menge von bis zu 50 Gewichtsprozent (Gew.-%).

2. Abdichtungszusammensetzung nach Anspruch 1, wobei ein Alkylsilan verwendet wird und es sich bei dem Alkyl um ein lineares oder verzweigtes Alkyl handelt.

3. Abdichtungszusammensetzung nach einem der obigen Ansprüche, wobei es sich bei den funktionellen Polymeren um methoxyfunktionalisierte Polymere und/oder ethoxyfunktionalisierte Polymere handelt.

4. Abdichtungszusammensetzung nach einem der obigen Ansprüche, umfassend ein Antioxidans, vorzugsweise ein Octadecyl-3-(3,5-di-tert.-butyl-4-hydroxyphenyl)propionat, und/oder einen Licht/UV-Stabilisator, vorzugsweise ein Bis(1,2,2,6,6-pentamethyl-4-piperidinyl)sebacat.

5. Abdichtungszusammensetzung nach einem der obigen Ansprüche, umfassend das silanfunktionelle Polymer in einer Menge von 5 bis 50 Gewichtsprozent (Gew.-%).

6. Verfahren zur Herstellung einer Abdichtungszusammensetzung nach Anspruch 1, das folgende Schritte umfasst:
a) Mischen der Komponenten
i) ein Alkyltrimethoxysilan und/oder ein Alkyltriethoxysilan und/oder ein Alkyldimethoxymethylsilan und/oder ein Alkyldiethoxymethylsilan,
ii) ein Aminosilan
unter Schutzgas (Argon, Stickstoff) über einen Zeitraum von 10 min;
b) dann Zugeben von
iii) einem gefällten Calciumcarbonat,
iv) Siliciumdioxid und/oder pyrogenem Siliciumdioxid;
c) Mischen unter statischem Vakuum bis zu einer Temperatur von 50 bis 80° C, vorzugsweise durch Erhitzen oder Rühren;
d) dann Zugeben des silanfunktionellen Polymers, vorzugsweise ohne Füllstoffe, und Fortsetzen des Mischens unter Vakuum;
e) dann Zugeben des Katalysators;
f) Fortsetzen des Mischens unter Vakuum über einen Zeitraum von weiteren 1 bis 5 Minuten;
g) Abfüllen des fertigen gemischten Materials in Eimer, Säcke oder andere Behälter.

7. Verfahren nach Anspruch 6, bei dem die Abdichtungszusammensetzung in einer Menge von 200 bis 1500 g/m² auf poröse Platten auf Sand/ZementBasis aufgebracht wird.

8. Verfahren nach Abschluss 6, bei dem ungefähr 10 Gew.-% eines Lösungsmittels zugegeben werden.

9. Verfahren nach Anspruch 6, bei dem ein Epoxidharz und/oder ein Licht/UV-Stabilisator und/oder ein Antioxidans zugegeben wird bzw. werden.

10. Verfahren nach Anspruch 9, bei dem es sich bei dem Antioxidans um Octadecyl-3-(3,5-di-tert.-butyl-4-hydroxyphenyl)propionat handelt.

11. Verfahren nach Anspruch 9, bei dem es sich bei dem Licht/UV-Stabilisator um Bis(1,2,2,6,6-pentamethyl-4-piperidinyl)sebacat handelt.

12. Verwendung der Abdichtungszusammensetzung nach einem der Ansprüche 1 bis 5 zum Abdichten von Baustoffen, insbesondere zum Abdichten von Fußböden auf Zementbasis, wie Fußböden aus Zement.

## Revendications

1. Composition d'étanchéification comprenant :
a) un alkyltriméthoxysilane et/ou un alkyltriéthoxysilane et/ou un alkyldiméthoxyméthylsilane et/ou un alkyldiéthoxyéthylsilane dans une quantité de 1 à 10 pour cent en poids (%pds) ;
b) un aminosilane préférablement dans une quantité de 1 à 5 pour cent en poids (%pds) ;
c) à titre optionnel de la silice préférablement dans une quantité de 50 pour cent en poids (%pds) au maximum et/ou de la silice pyrogénée préférablement dans une quantité de 0,1 à 30 pour cent en poids (%pds) ;
d) un polymère fonctionnel silane ayant une masse moléculaire de 500 à 20 000 g/mol ;
e) à titre optionnel un catalyseur dans une quantité de 0 à 2 pour cent en poids (%pds) ; et
f) du carbonate de calcium et/ou de magnésium préférablement dans une quantité de 50 pour cent en poids (%pds) au maximum.

2. Composition d'étanchéification selon la revendication 1, dans laquelle un alkylsilane est utilisé et l'alkyle est un alkyle à chaîne linéaire ou ramifiée.

3. Composition d'étanchéification selon l'une quelconque des revendications précédentes, les polymères fonctionnels étant des polymères à fonctionnalité méthoxy et/ou des polymères à fonctionnalité éthoxy.

4. Composition d'étanchéification selon l'une quelconque des revendications précédentes, comprenant un antioxydant, préférablement un propionate d'octadécyl-3-(3,5-di-tert-butyl-4-hydroxyphényle), et/ou un stabilisant à la lumière/aux UV, préférablement un sébaçate de bis(1,2,2,6,6-pentaméthyl-4-pipéridinyle).

5. Composition d'étanchéification selon l'une quelconque des revendications précédentes, comprenant le polymère fonctionnel silane dans une quantité de 5 à 50 pour cent en poids (%pds).

6. Procédé de préparation d'une composition d'étanchéification selon la revendication 1, comprenant les étapes suivantes :
a) mélanger les constituants
i) un alkyltriméthoxysilane et/ou un alkyltriéthoxysilane et/ou un alkyldiméthoxyméthylsilane et/ou un alkyldiéthoxyéthylsilane,
ii) un aminosilane,
sous une atmosphère constituée d'un gaz protecteur (argon, azote) pendant 10 minutes ;
b) puis ajouter
iii) un carbonate de calcium précipité,
iv) de la silice et/ou de la silice pyrogénée ;
c) mélanger sous vide statique à une température de 50 °C à 80 °C au maximum, préférablement par chauffage ou agitation ;
d) puis ajouter le polymère fonctionnel silane, préférablement sans charges, et
continuer la procédure de mélange sous vide ;
e) puis ajouter le catalyseur ;
f) continuer de mélanger sous vide pendant 1 à 5 minutes de plus ;
g) remplir des seaux, des sacs ou d'autres contenants avec le matériau prémélangé.

7. Procédé selon la revendication 6, dans lequel la composition d'étanchéification est appliquée sur des plaques poreuses à base de sable/ciment dans une quantité de 200 g/m² à 1 500 g/m².

8. Procédé selon la revendication 6, dans lequel approximativement 10 % en poids d'un solvant est ajouté.

9. Procédé selon la revendication 6, dans lequel une résine époxyde et/ou des stabilisants à la lumière/aux UV et/ou un antioxydant est/sont ajouté(S).

10. Procédé selon la revendication 9, dans lequel l'antioxydant est le propionate d'octadécyl-3-(3,5-di-tert-butyl-4-hydroxyphényle).

11. Procédé selon la revendication 9, dans lequel le stabilisant à la lumière/aux UV est le sébaçate de bis(1,2,2,6,6-pentaméthyl-4-pipéridinyle).

12. Utilisation de la composition d'étanchéification selon l'une quelconque des revendications 1 à 5 pour l'étanchéification de matériaux de construction, en particulier pour l'étanchéification de sols à base de ciment, tels que des sols construits avec du béton.
